# EUROPEAN PATENT APPLICATION

(11) **EP 1 589 772 A1**
(43) Date of publication of application: **26.10.2005**
(21) Application number: 04706118.9
(22) Date of filing: 29.01.2004
(51) Int. Cl.: H04Q 7/20

(54) **RELAY COMMUNICATION DEVICE, COMMUNICATION METHOD AND MOBILE COMMUNICATION SYSTEM**

(30) Priority: 28.01.2003 CN 03115211
(71) Applicant: Da Tang Mobile Communications Equipment Co., Ltd., Beijing 100083 (CN)
(72) Inventor: LI, Shihe, Hai Dian District, Beijing 100083 (CN); LI, Feng, Hai Dian District, Beijing 100083 (CN); YANG, Guiliang, Hai Dian District, Beijing 100083 (CN)
(74) Representative: Manitz, Finsterwald & Partner GbR
(86) International application number: PCT/CN2004/000084
(87) International publication number: WO 2004/068876

(57) **Abstract**

The present invention relates to relay communication equipment, relay communication method thereof and mobile communication system adopting this relay communication equipment. Relay communication equipment mainly comprises: general control unit constituted by digital signal processor; terminal access function unit constituted by radio frequency transceiver and physical layer signal processing equipment as well as independent antenna and feeder thereof; base station function unit constituted by radio frequency transceiver and physical layer signal processing equipment as well as independent antenna and feeder thereof, for implementing radio signal transmission and receiving between the relay communication equipment and a certain base station in mobile communication network, as well as that between the relay communication equipment and mobile terminals. The mobile communication system adopting relay communication equipment comprises at least one the said relay communication equipment. The relay communication equipment can be located in the area that is not covered by mobile communication network, so that common user terminals can acquire mobile communication service in this area. The relay communication equipment fulfills information communication among terminals inside the local subnet and communication between terminal inside the subnet and that outside the subnet through the detected base station.

## Description

### Field of the Technology

The present invention relates to relay communication technology of a mobile communication system, more particularly to the relay communication equipment, relay communication method thereof and mobile communication system using this relay communication equipment, belongs to time division duplex or frequency division duplex communication system field.

### Background of the Invention

In the third generation mobile communication system, typical equipment comprises core network, base station controller (or rather radio network controller, RNC), wireless base station and user terminal, etc. In time division duplex (say TD-SCDMA system) or frequency division duplex mobile communication system, the equipment with both user terminal function and wireless base station function is called relay equipment. Relay equipment are of important use in the following environments: in areas where it is difficult to set up optical fiber cable or electric wire between base station and RNC; when the established base station or optical fiber cable between base stations and RNC are damaged due to war, earthquake and natural disasters like flood, so that wireless mobile communication system of this area is paralytic; in the train, coach or closed carriage, when it's difficult for mobile communication users to communicate with mobile communication systems outside; in large buildings, when penetrating power of electric wave is insufficient, there are many users and it's difficult for them to communicate with the outside. In the present mobile communication systems, repeaters are used to improve the covering in those areas with poor system covering; in carriages of the train or automobile, special terminal equipment (like truck-mounted terminal) is mainly used to solve some of the problems; in large buildings of the city, base stations are added or leaking antenna are set up. Employing this special terminal equipment will lead to a certain limitation for users in terms of using their own terminals, while it will need to establish electric cable, optical fiber cable or microwave link to use the repeaters or add base stations or set up leaking antenna, so that it's not flexible to implement.

### Summary of the Invention

The object of the present invention is to overcome the shortcoming of the prior art, provide a relay communication equipment as well as communication method thereof and mobile communication system that takes use of this equipment and method, wherein the relay communication equipment can communicate with terminals like the base station and can also communicate with base stations of the system like the terminal, without needing to set up electric cable or optical fiber cable to connect with the system, with fast and flexible disposition.

The present invention is implemented through the following technical scheme, and relay equipment of the present invention mainly comprises: terminal access function unit constituted by independent antenna and feeder, radio frequency transceiver and physical layer signal processing equipment, base station function unit constituted by independent antenna and feeder, radio frequency transceiver and physical layer signal processing equipment, general control unit comprising digital signal processor, control bus and high-rate data bus connecting the terminal access function unit and the general control unit, control bus and high-rate data bus connecting the base station function unit and the general control unit; the terminal access function unit fulfilling the radio signal transmission and receiving between the relay equipment and mobile communication network, the terminal access function unit transmitting the data from the general control unit to the mobile communication network, wherein the data are transformed into radio signal after being orderly processed by the physical layer signal processing equipment and the radio frequency transceiver, and then transmitted to the air through the feeder and the antenna, the radio signal transmitted to the terminal access function unit by the mobile communication network being output to the general control unit in digital signal format after being orderly processed by the antenna and the feeder, the radio frequency transceiver and the physical layer signal processing equipment; the base station function unit fulfilling the radio signal transmission and receiving between the relay equipment and the mobile terminal, the base station function unit transmitting the data from the general control unit to the mobile terminal, wherein the data are transformed into radio signal after being orderly processed by the physical layer signal processing equipment, the radio frequency transceiver, the antenna and the feeder, and then transmitted to the air, the radio signal transmitted to the base station function unit by the mobile terminal being output to the general control unit in digital signal format after being orderly processed by the antenna and the feeder, the radio frequency transceiver and the physical layer signal processing equipment.

The terminal access function unit comprises: independent antenna and feeder, one or more than one radio frequency transceiver, one or more than one physical layer signal processing equipment, wherein the radio frequency transceiver is connected with the independent antenna and feeder, the physical layer signal processing equipment is connected with the radio frequency transceiver, the radio frequency transceiver can work with at least one carrier wave and multiple time slot, the physical layer signal processing equipment is constituted by special-purpose chip Alternate Special Integrated Circuit (ASIC) and programmable device to fulfill processing of physical layer signal in communication with conventional base stations of mobile communication network.

The base station function unit comprises: independent antenna and feeder, one or more than one radio frequency transceiver, one or more than one physical layer signal processing equipment, wherein the radio frequency transceiver is connected with the independent antenna and feeder to fulfill the processing of air access physical layer signal between the relay equipment and mobile user terminal in the local subnet (terminals in the covering area of the base station function unit), the physical layer signal processing equipment is connected with the radio frequency transceiver, the radio frequency transceiver can work with at least one carrier wave and multiple time slot. The physical layer signal processing equipment is constituted by special-purpose chip Alternate Special Integrated Circuit (ASIC) and programmable device to fulfill processing of physical layer signal in communication with the mobile user terminal in the local subnet.

General control unit comprises: multiple digital signal processors, control bus, high-rate data bus, terminal voice and data interface, and Local Monitoring Terminal (LMT) interface. The general control unit processes high-layer signaling of terminal and base station, configures the equipment and manages wireless resource in subnet according to command of mobile communication system, and monitors and controls the whole equipment operation. The general control unit possesses the control bus connected to the terminal access unit and the base station function unit; the general control unit provides the high-rate data bus connected to the terminal access unit and the base station function unit; the general control unit provides signal switching function, so that the communication services in local subnet can complete internal services without connecting to mobile communication system through the terminal access function unit, so as to increase subnet capacity (Generally, relay communication system communicates with actual terminal through the base station function unit, and the service data are forwarded to mobile communication system through the terminal function unit, then returned by mobile communication system, and service communication in local subnet is completed then). The general control unit provides terminal voice and data interface, so that this equipment is of terminal's complete functions, and provides interface for monitoring and managing Local Monitoring Terminal LMT.

The physical layer signal processing equipment inside the terminal access function unit and the physical layer signal processing equipment inside the base station function unit can be implemented independently or in combination.

The base station function unit supports terminal access of different wireless interface specification. The general control unit comprises terminal voice and data interface, so that this equipment is of terminal's complete functions. The general control unit comprises interfaces for monitoring and managing Local Monitoring Terminal LMT. The digital signal processor is Micro-Controller Unit (MCU), Digital Signal Processor (DSP) or Alternate Special Integrated Circuit (ASIC).

The communication method for the relay communication equipment of the present invention comprising:
A. initialization: the terminal access unit of the relay communication equipment finding base station, sending access request to the base station, mobile communication network sending configuration information to the terminal access unit through downlink channel of the base station, the relay communication equipment configuring itself according to the configuration information;
B. the relay communication equipment subnet providing services: after the said relay communication equipment finishing the initialization, the terminal access unit thereof keeping to monitor broadcast channel of the base station, and the base station function unit thereof providing services for those terminals in its covering area through subnet broadcast channel and other necessary downlink public channels;
C. the relay communication equipment service terminating: when the relay communication equipment is not needed anymore to cover this area, the relay communication equipment sending information to the base station through the terminal access unit, starting the process of resource release, ending the service and deleting the subnet.

Before executing step A, the independent antenna and feeder part of the base station function unit in the relay communication equipment are placed in the expected covering area of the relay communication equipment, and the independent antenna and feeder part of the terminal access unit in the relay communication equipment are placed in the covering geographical area of mobile communication network.

In step A, network transmits configuration information to the terminal access unit through downlink channel of the base station, and the configuration information thereof comprises carrier frequency, maximum transmission power, service capacity, time slot or code channel for transmitting services with adjacent base stations.

In step B, in the covering area of the relay communication equipment, terminal finds the downlink public channel of this subnet, signals of the downlink public channel are from relay communication equipment, inside the covering area of the relay communication equipment, the terminal establishes, holds or releases the wireless connection with the relay communication equipment by taking use of wireless resources provided by the base station function unit of the relay communication equipment. If the communication destination of the terminal is another terminal and the two terminals in communication are both in the same subnet, the relay communication equipment finishes signal switching between these two terminals, charging-relevant information is transmitted to the base station through the terminal access unit of the relay communication equipment. If the communication destination of the terminal is a user outside this subnet, the relay communication equipment receives signals of the terminal through the base station function unit, after reprocessing the control information and service data thereof, transmits the reprocessed information to the base station through the terminal access unit, meanwhile receives information that is transmitted to the terminal by the base station through the terminal access unit, after reprocessing the control information and service data thereof, transmits the reprocessed information to the terminal through the base station function unit.

The mobile communication system adopting the relay communication equipment of the present invention, comprises at least one terminal, at least one base station and at least one relay communication equipment, the relay communication equipment at least comprises one terminal access unit and one base station function unit, and covers a certain geological area, the terminal and the base station function unit of the relay communication equipment mutually transmit and receive radio signals in the geological covering area of the relay communication equipment, the base station can cover a certain geological area, the relay communication equipment and the base station mutually transmit and receive radio signals in the geological covering area of the base station through the terminal access unit, the terminal establishes, holds and releases the wireless connection with the relay communication equipment in the geological covering area of the relay communication equipment, the relay communication equipment establishes, holds and releases the wireless connection with the base station in the geological covering area of the base station.

The terminal detects the signal transmitted on downlink public channel by the relay communication equipment in the geological covering area of the relay communication equipment, and assumes this signal is transmitted by common base station. The terminal can establish, hold and release the wireless connection by taking use of the method for establishing, holding and releasing wireless connection with common base station.

During the period when the terminal and the relay communication equipment are in connection, according to the different communication destinations, if the communication target terminal is inside subnet, the relay communication equipment takes charges of signaling, data processing and switching between the two terminals; if the communication target terminal is outside the subnet, the relay communication equipment takes charge of signaling, data processing and forwarding between the terminal and the base station.

The operation mode of the present invention will be described by taking time division duplex mobile communication system. Time Division-Synchronous Code Division Multiple Access (TD-SCDMA) system of the third generation mobile communication has multiple time slot structure; both uplink and downlink of each time slot can be set by the system. Taking TD-SCDMA standard for example, the subnet provided by this relay communication equipment can be considered as a cell in mobile communication network, and the user terminal's operation modes in this subnet and in mobile communication network are the same. After the relay communication equipment is installed, adjacent base stations are searched and access is applied for. When the operation is started, the base station function unit cannot transmit signal. At first the terminal access unit must search adjacent base stations, and apply to access like common terminals, and then put forward the operation application of this relay communication equipment while applying for access. After this application is accepted by the system, the system will configure this relay communication equipment, namely configuring those indispensable parameters such as operation carrier frequency, maximum transmission power electric level, service capacity, time slot or code channel for transmission service among base stations. After the relay communication equipment acquires the configuration, subnet starts working, by using the terminal access unit thereby, the relay communication equipment will receive the signals transmitted by base stations in the network through Broadcast Channel and Paging Channel (BCCH and PCH), and can forward all or part of the channel's information through the self broadcast channel of the base station function unit thereof, or generate self broadcast information and send the information through broadcast channel. As for the terminals in covering area of this subnet, this subnet (relay communication equipment) is considered as a common base station, wherein subnet and terminals communicate in completely the same way. As to the relay communication equipment with switching function, the working mode can be set like this: communications among terminals inside this subnet (either voice or data service) are switched inside this relay communication equipment, only charging information rather than service data is transmitted to the system, in order to increase system capacity; as to communications between terminals inside this subnet and outside this subnet (either voice or data service), this relay communication equipment just plays forwarding role, the communications are forwarded to the adjacent base station through service time slot (code channel) between the relay communication equipment and the adjacent base station, and connected to the system through the adjacent base station, wherein the working mode is the same as that for implementing common service. After one communication is finished, the system or relay communication equipment will release the resource for other users' use.

The present invention is of substantiality and distinct improvement, equipment of the present invention can place the antenna and feeder of base station function part in the area that is not covered by mobile communication network, so that common user terminals can acquire mobile communication service in this area; equipment of the present invention can also quickly provide services for those areas with urgent need for mobile communication service. The present invention can also greatly improve system's covering condition, so that mobile communication users on the train or coach can communicate freely in travel; and make the users in large buildings acquire the services conveniently.

### Brief Description of the Drawings

Figure 1 is a flowchart illustrating how to set relay communication equipment for mobile communication network;
Figure 2 is a framework illustrating relay communication equipment structure of the present invention;
Figure 3 is the basic operating flowchart of relay communication equipment of the present invention.

### Embodiments of the Invention

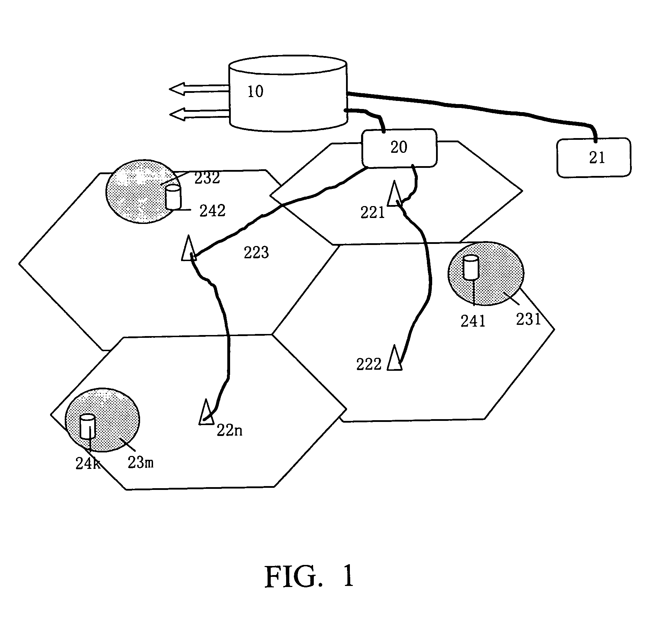

The application distribution of relay communication equipment of the present invention in mobile communication system is shown in figure 1, wherein part of the system's conventional base stations like 221, 222, 223, ... , 22n are connected with base station controller 20 in cable or wireless mode and covers certain area. Mobile communication service is implemented in these covered areas. However other areas like 231, 232, ... , 23m cannot be covered by conventional base stations. In such areas, relay communication equipment of the present invention can be applied, like 241, 242, ... , 24k, wherein antennas of the terminal access units of these relay communication equipments are set up in the covered areas of convention base stations 222, 223,..., 22n; while antennas of base station function units of relay communication equipments can cover the areas that cannot be covered by the conventional base stations, so that subnets are established one by one. User terminal's working mode in areas covered by subnet and that in areas covered by conventional base station are the completely the same. It is obvious that the relay communication equipment expands and improves the covering of mobile communication network. Since the relay communication equipment can be mounted on mobile object, such as the train and coach, subnet can be established inside the closed carriage and performance of mobile communication network can be improved. In figure 1, 21 denotes base station controller and 10 denotes system network side.

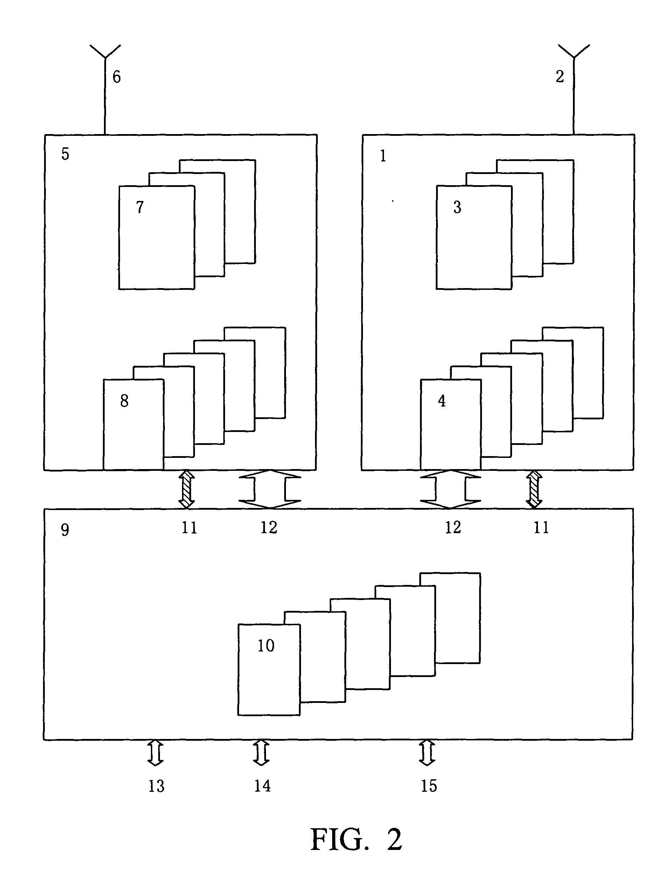

Equipment principle framework of the present invention is shown in figure 2, mainly comprising: terminal access function unit 1, independent antenna and feeder 2, radio frequency transceiver 3, physical layer signal processing equipment 4, base station function unit 5, independent antenna and feeder 6, radio frequency transceiver 7, physical layer signal processing equipment 8, general control unit 9, digital signal processor 10, control bus 11 and high-rate data bus 12, wherein general control unit 9 is connected with terminal access function unit 1 through high-rate data bus 12 and control bus 11, also connected with base station function unit 5 through high-rate data bus 12 and control bus 11.

Terminal access function unit 1 receives and transmits the radio signals between the relay communication equipment and mobile communication network, terminal access function unit 1 transmits the data from general control unit 9 to mobile communication network, after being processed by physical layer signal processing equipment 4, radio frequency transceiver 3, independent antenna and feeder 2, the data are transformed into radio signals and sent to the air, after being processed by independent antenna and feeder 2, radio frequency transceiver 3 and physical layer signal processing equipment 4, the radio signals that mobile communication network transmits to terminal access function unit 1 are output to general control unit 9 in digital signal format.

Base station function unit 5 receives and transmits the radio signals between the relay communication equipment and mobile terminal, base station function unit 5 transmits the data from general control unit 9 to mobile terminal, after being processed by physical layer signal processing equipment 8, radio frequency transceiver 7, independent antenna and feeder 6, the data are transformed into radio signals and sent to the air, after being processed by independent antenna and feeder 6, radio frequency transceiver 7 and physical layer signal processing equipment 8, the radio signals that mobile terminal transmits to base station function unit 5 are output to general control unit 9 in digital signal format.

Terminal access function unit 1 comprises: independent antenna and feeder 2, one or more than one radio frequency transceiver 3, one or more than one physical layer signal processing equipment 4, wherein radio frequency transceiver 3 is connected with independent antenna and feeder 2, physical layer signal processing equipment 4 is connected with radio frequency transceiver 3, radio frequency transceiver 3 can work with at least one carrier wave and multiple time slot, physical layer signal processing equipment 4 is constituted by special-purpose chip Alternate Special Integrated Circuit (ASIC) and programmable device to fulfill processing of physical layer signal in communication with conventional base stations of mobile communication network.

Base station function unit 5 comprises: independent antenna and feeder 6, one or more than one radio frequency transceiver 7, one or more than one physical layer signal processing equipment 8, wherein radio frequency transceiver 7 is connected with independent antenna and feeder 6 to fulfill the processing of air access physical layer signal between the relay equipment and mobile user terminal in the local subnet, physical layer signal processing equipment 8 is connected with radio frequency transceiver 7, radio frequency transceiver 7 can work with at least one carrier wave and multiple time slot. Physical layer signal processing equipment 8 is constituted by special-purpose chip Alternate Special Integrated Circuit (ASIC) and programmable device to fulfill processing of physical layer signal in communication with mobile user terminal in the local subnet.

General control unit 9 comprises: multiple digital signal processors 10, control bus 11, high-rate data bus 12, terminal voice and data interface 13 and 14, and Local Monitoring Terminal (LMT) interface 15. General control unit 9 processes high-layer signaling of terminal and base station, configures the equipment and manages wireless resource in subnet according to command of mobile communication system, monitors and controls the whole equipment operation. General control unit possesses the control bus 11 connected to both terminal access unit 1 and base station function unit 5. General control unit 9 provides the high-rate data bus 12 connected to both terminal access unit 1 and base station function unit 5. General control unit 9 provides signal switching function, so that the communication services in local subnet can complete internal services without connecting to mobile communication system through the transiting terminal access function unit, and increase subnet capacity. Namely, after arriving at general control unit 9, the service information from base station function unit is switched and directly returned to the target terminal through the base station function unit, skipping the communication service data loop course between the terminal access function unit and mobile communication system, so that wireless resource of this part is saved. General control unit 9 provides terminal voice and data interface 13 and 14, so that this equipment is of terminal's complete functions, and provides interface for monitoring and managing Local Monitoring Terminal LMT interface 15.

The communication method adopting the relay communication equipment of the present invention is as follows:
A. initialization: terminal access unit 1 of the said relay communication equipment finds the base station, and sends access request to the said base station. The network sends configuration information to the terminal access unit through downlink channel of this base station, wherein the configuration information comprises carrier frequency and maximum transmission power, etc. The relay communication equipment configures itself according to the configuration information.
B. the relay communication equipment provides subnet services. After the initialization, the relay communication equipment keeps monitoring broadcast channel of the said base station through terminal access unit 1, and the base station function unit 5 thereof provides services for those terminals in its covering area through subnet broadcast channel and other necessary downlink public channels.
   In the covering area of the said relay communication equipment, the terminal can detect downlink public channel of this subnet, and assumes that signals of the said downlink public channel are form one base station, namely in terms of the terminal, the said relay communication equipment is a common base station. By taking use of the wireless resource provided by base station function unit 5 of the relay communication equipment, the terminal can establish, hold or release wireless connection with the relay communication equipment in the covering area of the said relay communication equipment. Here, according to different destinations of terminal communication, there are two operation modes for the relay communication equipment:
   First, communication destination of the said terminal (source terminal) is terminal user inside the subnet (destination terminal), namely this destination terminal is also in covering area of the said relay communication equipment and is holding a wireless connection with the said relay communication equipment, namely the two terminals in communication are both in the said subnet, then the said relay communication equipment implements signal switching between the said two terminals, here the charging-relevant information can be transmitted to the base station in mobile communication system (base station near the relay communication equipment) through base station function unit 5 of the relay communication equipment, but service information may not be transmitted to this base station in mobile communication system.
   Second, communication destination of the said terminal (source terminal) is terminal user outside the subnet (destination terminal), then the said relay communication equipment receives signals of the said source terminal through base station function unit 5, after reprocessing the control information and service data thereof, transmits the information to base station in mobile communication system (base station near relay communication equipment) through terminal access unit 1; meanwhile, the said relay communication equipment receives the information that this base station transmits to the said destination terminal through terminal access unit 1, after reprocessing the control information and service data, transmits the reprocessed information to the said destination terminal through base station function unit 5.
C. the relay communication equipment service terminates. When the relay communication equipment is not needed anymore to cover this subnet area, the said relay communication equipment sends information to the said base station through terminal access unit 1, starts the process of resource release, ends the service and deletes the subnet.

The mobile communication system adopting the relay communication equipment of the present invention comprises: at least a terminal, at least a conventional base station, and at least a relay communication equipment, wherein the relay communication equipment at least comprises a terminal access unit and a base station function unit, and covers a certain geological area. The terminal and base station function unit 5 of the relay communication equipment mutually transmit and receive radio signals in the geological covering area of the relay communication equipment. The conventional base station can cover a certain geological area, the relay communication equipment and the said conventional base station mutually transmit and receive radio signals in the geological covering area of the conventional base station through terminal access unit 1, the terminal establishes, holds and releases the wireless connection with relay communication equipment in the geological covering area of the relay communication equipment, the relay communication equipment establishes, holds and releases the wireless connection with the conventional base station in the geological covering area of the conventional base station.

In the geological covering area of the relay communication equipment, the said terminal detects the signal transmitted on downlink public channel of the said relay communication equipment, and assumes this signal is transmitted by common base station. The said terminal can establish, hold and release the wireless connection by taking use of the method for establishing, holding and releasing wireless connection with common base station.

During the period when the terminal and relay communication equipment are in connection, according to the different communication destinations, if the communication target terminal is inside subnet, the relay communication equipment takes charges of signaling, data processing and switching between the two terminals; if the communication target terminal is not inside the subnet, the relay communication equipment takes charge of signaling, data processing and forwarding of information between the said terminal and the said base station.

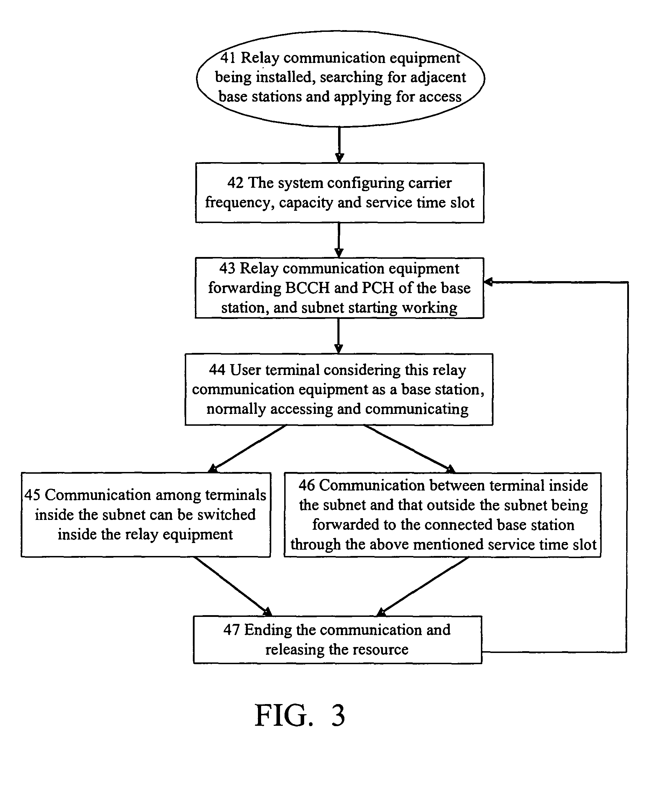

The working mode of relay communication equipment of the present invention is shown in figure 3, the working mode thereof is illustrated by taking time division duplex mobile communication system for example in the present invention. In the third generation mobile communication TD-SCDMA system, the time slot is of multiple structure, uplink and downlink of each time slot can be set by the system. Taking TD-SCDMA standard for example, the subnet provided by the relay communication equipment can be considered as a cell in mobile communication network, user terminal's working mode in this subnet and user terminal's working mode in mobile communication network are the same.

Step 41: after the relay communication equipment is installed, adjacent base stations are searched and access is applied for. When the operation is started, base station function unit cannot transmit signal, at first terminal access unit must search adjacent base stations, and apply for access like common terminals, and then put forward the operation application of this relay communication equipment while applying for access.

Step 42: after this application is accepted by the system, the system will configure this relay communication equipment, namely configuring those indispensable parameters such as operation carrier frequency, maximum transmission power electric level, service capacity, time slot or code channel for transmission service between adjacent base stations.

Step 43: after the relay communication equipment acquires the configuration, subnet starts working, by using the terminal access unit thereby, the relay communication equipment will receive the signals transmitted by adjacent base stations in the network through Broadcast Channel and Paging Channel (BCCH and PCH), and can forward all or part of the channel's information through the self broadcast channel using the base station function unit thereof, or generate self broadcast information and send the information through broadcast channel.

Step 44: As for the terminals in covering area of this subnet, this subnet (relay communication equipment) is considered as a common base station, wherein subnet and the terminal communicate in completely the same way. There may be two kinds of situations.

Step 45: as to the relay communication equipment with switching function, the working mode can be set like this: communications with terminals inside this subnet (either voice or data service) are switched inside this relay communication equipment, only charging information rather than service data is transmitted to the system, in order to increase system capacity.

Step 46: as to communications between terminals inside this subnet and outside this subnet (either voice or data service), this relay communication equipment just plays forwarding role, the communications are forwarded to the adjacent base station through service time slot (code channel), and connected to the system through adjacent base station, wherein the working mode is the same as that for implementing common service.

Step 47: after one communication is finished, the system or relay communication equipment will release the resource for other users' use.

In the present invention, with reference to mobile communication system of time division duplex and taking one of the third generation mobile communication standards TD-SCDMS for example, technological characters relevant to the relay communication equipment are illustrated. After being properly and equally transformed, technological characters of the present invention are also applicable in systems of other time division duplex or frequency division duplex mobile communication standards.

## Claims

1. A relay communication equipment applied in mobile communication system, comprising: general control unit (9) and base station function unit (5), wherein base station function unit (5) comprising independent antenna and feeder (6), general control unit (9) being connected with base station function unit (5) through high-rate data bus (12) and control bus (11), wherein:
the equipment further comprising terminal access function unit (1), and the terminal access function unit (1) comprising independent antenna and feeder (2); the general control unit (9) being connected with the terminal access function unit (1) through the high-rate data bus (12) and the control bus (11); the terminal access function unit (1) fulfilling the radio signal transmission and receiving between the relay equipment and mobile communication network, the terminal access function unit (1) transforming the data from the general control unit (9) into radio signal and transmitting the signal to mobile communication network through the independent antenna and feeder (2), the terminal access function unit (1) also transforming the radio signal, which is from mobile communication network and is received by the independent antenna and feeder (2), into digital signal and transmitting the signal to the general control unit (9); the base station function unit (5) fulfilling the radio signal transmission and receiving between the relay equipment and mobile communication network, the base station function unit (5) transforming the data from the general control unit (9) into radio signal and transmitting the signal to mobile terminal through the independent antenna and feeder (6), the base station function unit (5) also transforming the radio signal, which is from mobile terminal and is received by the independent antenna and feeder (6), into digital signal and transmitting the signal to the general control unit (9).

2. The relay communication equipment applied in mobile communication system according to claim 1, wherein, the terminal access function unit (1) comprising: one or more than one radio frequency transceiver (3), and one or more than one physical layer signal processing equipment (4), wherein, the radio frequency transceiver (3) being connected with the independent antenna and feeder (2), the physical layer signal processing equipment (4) being connected with the radio frequency transceiver (3), the radio frequency transceiver (3) being able to work with at least one carrier wave and multiple time slot; the physical layer signal processing equipment (4) fulfilling physical layer signal processing in communication with conventional base station in mobile communication network; data from the general control unit (9) being orderly processed by the physical layer signal processing equipment (4) and the radio frequency transceiver (3) as radio signal and then transmitted to the air through the independent feeder and antenna (2), data received by the independent feeder and antenna (2) being orderly processed by the radio frequency transceiver (3) and the physical layer signal processing equipment (4) as digital signal and then transmitted to the general control unit (9).

3. The relay communication equipment applied in mobile communication system according to claim 1, wherein, the base station function unit (5) comprising: one or more than one radio frequency transceiver (7), and one or more than one physical layer signal processing equipment (8); the radio frequency transceiver (7) being connected with the independent antenna and feeder (6), the physical layer signal processing equipment (8) being connected with the radio frequency transceiver (7), and the radio frequency transceiver (7) can work with at least one carrier wave and multiple time slots; the physical layer signal processing equipment (8) fulfilling physical layer signal processing in communication with mobile user's terminal in the local subnet; data from the general control unit (9) being orderly processed by the physical layer signal processing equipment (8) and the radio frequency transceiver (7) as radio signal and then transmitted to the air through the independent feeder and antenna (6), data received by the independent feeder and antenna (6) being orderly processed by the radio frequency transceiver (7) and the physical layer signal processing equipment (8) as digital signal and then transmitted to the general control unit (9).

4. The relay communication equipment applied in mobile communication system according to claim 1, wherein, the general control unit (9) comprising: one or more than one digital signal processor (10) to process high-level signaling of terminal and base station which includes: configuring the relay communication equipment and managing wireless resource in subnet according to mobile communication system's command, monitoring and controlling the whole operation of relay communication equipment, providing communication service data switching among terminals in this subnet, and forwarding the communication service data among terminals both inside and outside of this subnet.

5. The relay communication equipment applied in mobile communication system according to claim 4, wherein, the general control unit (9) further comprising terminal voice and data interfaces (13, 14), so that the relay communication equipment is of terminal's complete function.

6. The relay communication equipment applied in mobile communication system according to claim 4, wherein, the general control unit (9) further comprising LMT interface (15) for monitoring and managing local terminal.

7. The relay communication equipment applied in mobile communication system according to claim 4, wherein the digital signal processor (10) is Micro-Controller Unit (MCU), Digital Signal Processor (DSP) or Alternate Special Integrated Circuit (ASIC).

8. The relay communication equipment applied in mobile communication system according to claim 1, wherein the base station function unit (5) supporting terminal accesses of different wireless interface specifications.

9. A communication method of relay communication equipment applied in mobile communication system according to claim 1, comprising the following steps:
A. initialization: terminal access unit of the relay communication equipment finding the base station, sending access request to the base station, mobile communication network sending configuration information to the terminal access unit through downlink channel of the base station, the relay communication equipment configuring itself according to the configuration information;
B. the relay communication equipment providing subnet services: after the relay communication equipment finishing the initialization, the terminal access unit thereof keeping to monitor broadcast channel of the base station, and the base station function unit thereof providing services for those terminals in its covering area through subnet broadcast channel and other necessary downlink public channels;
C. the relay communication equipment service terminating: when the relay communication equipment is not needed anymore to cover the area, the relay communication equipment sending information to the base station through the terminal access unit, starting the process of resource release, ending the service and deleting the subnet.

10. The communication method of relay communication equipment applied in mobile communication system according to claim 9, wherein, before executing step A, the independent antenna and feeder part of the base station function unit in the relay communication equipment being placed in the expected covering area of relay communication equipment, and the independent antenna and feeder part of the terminal access unit in relay communication equipment being placed in the covering geographical area of mobile communication network.

11. The communication method of relay communication equipment applied in mobile communication system according to claim 9, wherein, in step A, network transmitting configuration information to the terminal access unit through downlink channel of the base station, and the configuration information thereof comprising carrier frequency, maximum transmission power, service capacity, time slot or code channel for transmitting services with adjacent base stations.

12. The communication method of relay communication equipment applied in mobile communication system according to claim 9, wherein, in the step B, the services provided for terminals in the covering area of the relay communication equipment, comprising: the terminal finding the downlink public channel of the subnet, signals of the downlink public channel being from the relay communication equipment, the terminal establishing, holding or releasing the wireless connection with the relay communication equipment by taking use of wireless resources provided by the base station function unit of the relay communication equipment; when the communication destination of the terminal is another terminal and the two terminals in communication are in the same subnet, the relay communication equipment finishing signal switching between these two terminals, charging-relevant information being transmitted to the base station through the terminal access unit of the relay communication equipment; when the communication destination of the terminal is a user terminal outside this subnet, the relay communication equipment receiving signals of the terminal through the base station function unit, after reprocessing the control information and service data thereof, transmitting the reprocessed information to the base station through the terminal access unit, meanwhile receiving information that is transmitted to terminal by the base station through the terminal access unit, after reprocessing the control information and service data thereof, transmitting the reprocessed information to the terminal through the base station function unit.

13. A mobile communication system adopting the relay communication equipment according to claim 1, comprising at least one terminal, and at least one base station, wherein the system further comprising at least one relay communication equipment, wherein relay communication equipment comprising at least one terminal access unit and one base station function unit, and covering a certain geological area; the terminal and the base station function unit of the relay communication equipment mutually transmitting and receiving radio signals in the geological covering area of the relay communication equipment; the relay communication equipment and adjacent base station mutually transmitting and receiving radio signals in the geological covering area of the adjacent base station through the terminal access unit; the terminal establishing, holding and releasing the wireless connection with the relay communication equipment in the geological covering area of the relay communication equipment; the relay communication equipment establishing, holding and releasing the wireless connection with the adjacent base station in the geological covering area of the adjacent base station.

14. The mobile communication system adopting the relay communication equipment according to claim 13, wherein the terminal detecting the signal transmitted on downlink public channel by the relay communication equipment in the geological covering area of the relay communication equipment, and assuming that this signal is transmitted by common base station.

15. The mobile communication system adopting the relay communication equipment according to claim 13, wherein the terminal can establish, hold and release the wireless connection by taking use of the method for establishing, holding and releasing wireless connection with common base station.

16. The mobile communication system adopting the relay communication equipment according to claim 13, wherein during the period when the terminal and the relay communication equipment are in connection, when the communication target terminal and the terminal are inside the same subnet, the relay communication equipment taking charge of signaling, data processing and switching between the two terminals; when the communication target terminal and the terminal are not in the same subnet, relay communication equipment taking charge of signaling, data processing and forwarding between the terminal and the base station.
